# EUROPEAN PATENT APPLICATION

(11) **EP 2 190 199 A1**
(43) Date of publication of application: **26.05.2010**
(21) Application number: 08757792.0
(22) Date of filing: 20.06.2008
(51) Int. Cl.: H04N 7/173

(54) **TIME SHIFT TV SERVICE ESTABLISHMENT METHOD AND TIME SHIFT TV MEDIA FUNCTION ENTITY**

(30) Priority: 04.07.2007 CN 200710129329
(71) Applicant: Huawei Technologies Co., Ltd., Longgang District, Shenzhen Guangdong 518129 (CN)
(72) Inventor: QI, Baojian, Shenzhen (CN); WANG, Peng, Shenzhen (CN); LEI, Xiaosong, Shenzhen (CN)
(74) Representative: Kreuz, Georg Maria
(86) International application number: PCT/CN2008/071383
(87) International publication number: WO 2009/006814

(57) **Abstract**

A time-shift TV (TsTV) service establishment method and a time-shift TV media function (TsTV MF) entity are configured to realize TsTV services in an IMS network. The method includes the following steps. The TsTV MF entity receives a media negotiation carrying content delivery channel information and content control channel information initiated by a terminal, establishes a transmission connection with the terminal according to the media negotiation result, receives a media playing request sent from the terminal through the transmission connection, and sends media information corresponding to the media playing request to the terminal through a content delivery channel established according to the content delivery channel information. A TsTV MF entity is also provided. Thus, the TsTV services are realized in an IMS network.

## Description

The application claims priority to Chinese Patent Application No. 200710129329.8, filed on July 4, 2007 and entitled "TIME-SHIFT TV SERVICE ESTABLISHMENT METHOD AND TIME-SHIFT TV MEDIA FUNCTION ENTITY", which is incorporated herein by reference in its entirety.

### FIELD OF THE TECHNOLOGY

The present invention relates to the communication field, and more particularly to a time-shift TV (TsTV) service establishment method and a time-shift TV media function (TsTV MF) entity.

### BACKGROUND OF THE INVENTION

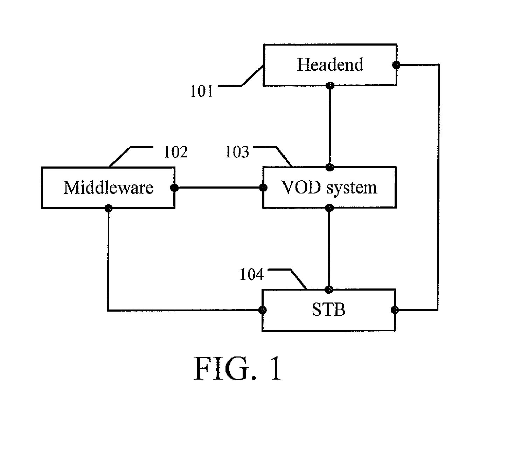

The time-shift TV (TsTV) service is a newly-emerged streaming media service. Currently, a solution based on an existing IP network is as shown in FIG. 1, in which the system is constituted by a headend, a middleware, a video on demand (VOD) system, a set-top box (STB), etc.

In the existing system, the TsTV service is basically realized as follows.

First, the STB 104 obtains a program menu from the middleware 102, a multicast group for playing a selected program according to the program menu is added in the STB 104, so as to receive the TV program, and the program is sent by means of multicasting.

If a user selects to pause or fast backward the program, the STB 104 sends a request to the middleware 102. The middleware 102 and the VOD system 103 interactively position a corresponding unicast program source and transmit its address to the middleware 102. Then, the middleware 102 returns the address to the STB 104.

Afterwards, the STB 104 obtains a unicast program stream from the VOD system 103, and controls the program through the real time streaming protocol (RTSP). If the user selects to fast forward and catch up with the live program, the STB 104 is once again switched to the multicast receiving state.

During the implementation of the present invention, the inventors found that, the above solution is directed to the existing IP network, and the TsTV service is realized by adopting the HTTP/RTSP and the like as a service request or control signaling. However, as for an IP multimedia subsystem (IMS) that is developing rapidly at present, the prior art does not explicitly provide any implementation way of realizing the TsTV service in the IMS system.

### SUMMARY OF THE INVENTION

Accordingly, the present invention is directed to a time-shift TV (TsTV) service establishment method and a time-shift TV media function (TsTV MF) entity, which are configured to realize TsTV services in an IMS network.

In an embodiment of the present invention, a TsTV service establishment method is provided. The method includes the following steps. A TsTV MF entity receives a media negotiation carrying content delivery channel information and content control channel information initiated by a terminal, establishes a transmission connection with the terminal according to a media negotiation result, receives a media playing request sent from the terminal through the transmission connection, and sends media information corresponding to the media playing request to the terminal through a content delivery channel established according to the content delivery channel information.

In an embodiment of the present invention, a TsTV service establishment method is provided. The method includes the following steps. A TsTV MF entity receives a media negotiation carrying content control channel information initiated by a terminal, establishes a transmission connection with the terminal according to a media negotiation result, receives a request message for content delivery channel information sent from the terminal through the transmission connection, returns a response message carrying the content delivery channel information to the terminal, receives a media playing request sent from the terminal, and sends media information corresponding to the media playing request to the terminal through a content delivery channel established according to the content delivery channel information.

In an embodiment of the present invention, a TsTV service establishment method is provided. The method includes the following steps. A service control function (SCF) receives operation information reported by a terminal, and sends a session initialization request message to a TsTV MF entity. The TsTV MF entity initiates a media negotiation request carrying content control channel information and content delivery channel information, establishes a transmission connection with the terminal according to a media negotiation result, receives a media playing request sent from the terminal through the transmission connection, and sends media information corresponding to the media playing request to the terminal through a content delivery channel established according to the content delivery channel information.

In an embodiment of the present invention, a TsTV service establishment method is provided. The method includes the following steps. An SCF receives a session update request message carrying TsTV service information sent from a terminal, and sends a session initialization request message to a TsTV MF entity. The TsTV MF entity initiates a media negotiation request carrying content control channel information, establishes a transmission connection with the terminal according to a media negotiation result, receives a media playing request sent from the terminal through the transmission connection, returns a response message carrying content delivery channel information to the terminal, and afterwards sends media information corresponding to the media playing request to the terminal through a content delivery channel established according to the content delivery channel information.

In an embodiment of the present invention, a TsTV service establishment method is provided. The method includes the following steps. An SCF receives a session initialization request message carrying a channel ID or carrying a channel ID and program position information sent from a terminal, determines a content delivery type according to the session initialization request message, and carries out corresponding processes according to the content delivery type.

In an embodiment of the present invention, a TsTV MF entity is provided. The TsTV MF entity includes:
a request message receiving unit, configured to receive a request message carrying content delivery channel information and content control channel information sent from a terminal;
a channel establishment control unit, configured to establish a transmission connection with the terminal according to the content control channel information;
a request receiving unit, configured to receive a media playing request sent from the terminal through the transmission connection; and
a media information returning unit, configured to return media information corresponding to the media playing request to the terminal through a content delivery channel established according to the content delivery channel information.

Alternatively, the TsTV MF entity includes:
a receiving unit, configured to receive a request message carrying content control channel information sent from a terminal;
a channel establishment control unit, configured to establish a transmission connection with the terminal according to the content control channel information;
a message transmission unit, configured to receive a request message for content delivery channel information sent from the terminal through the transmission connection, and return a response message carrying the content delivery channel information to the terminal;
a request receiving unit, configured to receive a media playing request sent from the terminal; and
a media information returning unit, configured to return media information corresponding to the media playing request to the terminal through a content delivery channel established according to the content delivery channel information.

In an embodiment of the present invention, a TsTV service triggering method is provided. The method includes the following steps. A terminal sends operation information and/or TsTV service information to an SCF according to an operation of a user, and the SCF triggers a TsTV service according to the operation information and/or TsTV service information.

In an embodiment of the present invention, a TsTV MF entity receives a request message carrying content delivery channel information and content control channel information sent from a terminal, so that the TsTV MF entity is enabled to establish a content control channel for transmitting control signaling with the terminal according to the received content control channel information, and establish a content delivery channel for transmitting real-time streaming media with the terminal according to the content delivery channel information, thereby realizing TsTV services in an IMS system.

### BRIEF DESCRIPTION OF THE DRAWINGS

FIG. 1 is a structural view of a TsTV service system in the prior art;

FIG. 2 is a flow chart of a TsTV service establishment method according to a first embodiment of the present invention;

FIG. 3 is a flow chart of a TsTV service establishment method according to a second embodiment of the present invention;

FIG. 4 is a flow chart of a TsTV service establishment method according to a third embodiment of the present invention;

FIG. 5 is a flow chart of a TsTV service establishment method according to a fourth embodiment of the present invention;

FIG. 6 is a flow chart of a TsTV service establishment method according to a fifth embodiment of the present invention;

FIG. 7 is a schematic view of a TsTV MF entity according to a first embodiment of the present invention; and

FIG. 8 is a schematic view of a TsTV MF entity according to a second embodiment of the present invention.

### DETAILED DESCRIPTION OF THE EMBODIMENTS

In an embodiment of the present invention, a TsTV service establishment method and a TsTV MF entity are provided, which are configured to realize TsTV services in an IMS system.

The TsTV services may be classified into the following two types according to the manner that a user enters a TsTV state.

1) Direct time-shift mode: when watching a live TV (LTV), the user presses a pause or backward key to switch from the live to the time-shift state.

2) Time-shift channel mode: an electronic program guide (EPG) provides time-shift channel information, and the user can select to watch a time-shift video program.

The TsTV service processing can be divided into the following four sub-processes.

A. Service establishment process: the service establishment process mainly refers to an initial establishment process of a service.

B. VCR operating process: when watching the TsTV service, the user may perform a VCR operation (also known as Trick Mode), for example, pause, fast forward, fast backward, and jump.

C. Handover process between unicast and multicast after the service is established: in an IMS-based IPTV system, the LTV generally transmits media streams by means of multicasting. The TsTV service generally transmits media streams by means of unicasting in a non-latest playing state (the time-shift content is being played), and generally transmits the media streams by means of multicasting in a latest playing state (the live content is being played). After a TsTV service session is established, the user can perform a VCR operation, for example, fast forward or jump to a latest playing point, thereby triggering the handover between multicast and unicast.

D. Service release process.

A general introduction of the TsTV service is given above, and the TsTV service establishment method in an embodiment of the present invention is described in detail below. Specifically, according to a user access mode, the TsTV service establishment method provided in the embodiments of the present invention can be classified into the following two types.

1. Direct time-shift mode

In this mode, the TsTV service establishment method can be subdivided into the following four embodiments.

1. A content delivery channel and a content control channel are established at the same time.

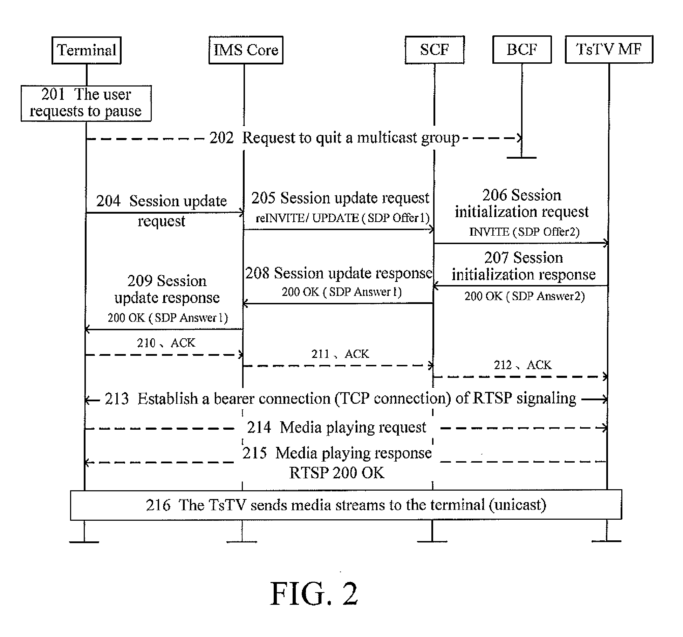

Referring to FIG. 2, in a first embodiment of the present invention, the TsTV service establishment method includes the following steps.

In Step 201, a user requests to pause a program.

The user watches an LTV in a multicast delivery mode, and the user requests a pause when watching the program.

The user requests a pause when watching the LTV supporting a VCR operation (or Trick Mode).

In Step 202, a terminal sends a request to a basic control function (BCF) for quitting a multicast group.

The terminal records playing position information of the media, and sends a report, about leaving the multicast group, to a multicast point that provides live media streams. In this embodiment, it is unnecessary to send a report message about leaving the multicast group when being based on Version IGMP 1.0, and it is necessary to send a report message about leaving the multicast group when being based on Version IGMP 2.0, so that this step is optional.

In Step 203, the user requests to resume playing the TV program.

For example, the user presses a play key on a remote control handle to request to resume playing the TV program. As the user no longer receives the multicast media streams at this time, the TsTV service is required to enable the user to resume watching the TV program.

In Step 204, the terminal sends a session update request.

The terminal sends a session update request to a network (IMS Core), in which the request carries media description information (SDP offer1) about the content delivery channel and the content control channel (for example, TCP connection).

In this embodiment, the multicast media streams of the original LTV may be stored or deactivated according to the actual requirements.

In Step 205, the session update request is forwarded.

After receiving the session update request message from the terminal, the IMS Core forwards the received session update request to a service control function (SCF) that provides the LTV according to IMS Core signaling routing rules defined based on the 3GPP IMS specification.

In Step 206, a session initialization request is initiated.

After receiving the session update request, the SCF determines whether the user is requesting the TsTV service or not according to the content of the session update request message, which is determined based on the references of service ID information carried in the SIP header field of the session update request message or the control channel information in the SDP message body. If it is determined that the user is requesting the TsTV service, the SCF initiates a new session initialization request to the TsTV MF entity that provides the TsTV services, in which the session initialization request message carries media description information (SDP Offer2) about the content delivery channel and the content control channel.

In this embodiment, the message routing mode between the SCF and the TsTV MF entity is not limited, for example, the message may be routed or forwarded without passing through the IMS Core.

In Step 207, a session initialization response message is returned.

After receiving the request, the TsTV MF entity that provides a time-shift service media resource establishes an SIP session and an RTSP session, generates a session ID of the RTSP session, distributes the media resource required by the TsTV service, returns a session initialization response message (200 OK) carrying media Answer information (SDP Answer2) about the content delivery channel and the content control channel, and waits for the establishment of the TCP connection.

In Step 208, a session update response message is returned.

The SCF sends a session update response message (200 OK) to the IMS Core, in which the message carries media Answer information (SDP Answer1) about the content delivery channel and the content control channel.

In Step 209, the session update response message is forwarded.

The IMS Core forwards the session update response message (200 OK) to the terminal, in which the message carries the media Answer information (SDP Answer1) about the content delivery channel and the content control channel.

In steps 210 to 212, the terminal returns an acknowledgement (ACK) message.

After receiving the session update response message, the terminal stores the critical information in the response message, for example, the media description information and session ID information. If an SIP reINVITE mechanism is adopted, the terminal sends a response ACK message to the IMS Core, and the message is transmitted to the TsTV MF entity via the SCF.

In Step 213, a bearer connection is established.

In the above steps, the terminal, SCF, and TsTV MF entity perform a media negotiation through interaction of the content delivery channel information and the content control channel information.

The terminal establishes a transmission connection (for example, TCP connection) that bears an RTSP with the TsTV MF entity according to the media negotiation result.

In Step 214, the terminal sends a media playing request.

The terminal sends a playing request message (RTSP PLAY) to the TsTV MF entity through the content control channel, in which the message carries parameter information such as a session ID and media position information (for example, absolute time for playing).

In Step 215, a media playing response is returned.

The TsTV MF entity sends a playing message (RTSP 200OK) to the terminal through the content control channel.

In Step 216, the media streams are transmitted.

The TsTV MF entity sends the streaming media content to the terminal through the content delivery channel.

In this embodiment, the pause and resuming operations of the user are taken as examples to illustrate the implementation of the TsTV service, and it is understandable that, other operations, for example, fast forward or slow forward, may also be adopted and the specific implementations thereof are similar.

In this embodiment, steps 210 to 215 are optional and can be selected according to actual requirements.

In this embodiment, as the terminal sends the session update request message carrying the content delivery channel information and the content control channel information, the TsTV MF establishes the content control channel and the content delivery channel according to the two parameters, thereby realizing TsTV services in an IMS system.

2. The content delivery channel and the content control channel are established independently.

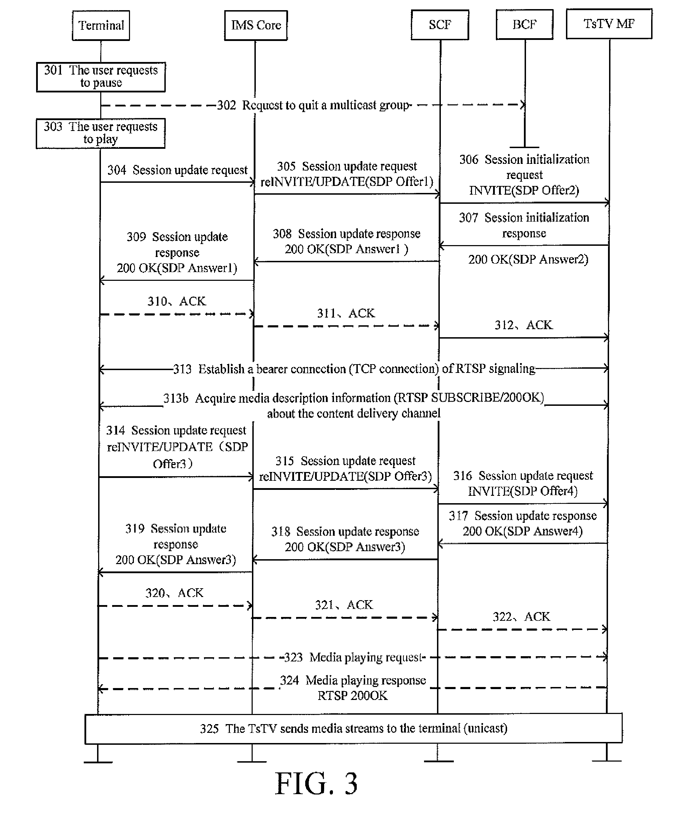

Referring to FIG. 3, in a second embodiment of the present invention, the TsTV service establishment method includes the following steps.

In Step 301, a user requests to pause a program.

The user watches an LTV in a multicast delivery mode, and requests a pause when watching the program.

The user requests a pause when watching the LTV supporting a VCR operation (or Trick Mode).

In Step 302, a terminal sends a request to a BCF for quitting a multicast group.

The terminal records playing position information of the media, and sends a report, about leaving the multicast group, to a multicast point that provides live media streams. In this embodiment, it is unnecessary to send a report message about leaving the multicast group when being based on Version IGMP 1.0, and it is necessary to send a report message about leaving the multicast group when being based on Version IGMP 2.0, so that this step is optional.

In Step 303, the user requests to resume playing the TV program.

For example, the user presses a play key on a remote control handle to request to resume playing the TV program. As the user no longer receives the multicast media streams at this time, the TsTV service is required to enable the user to resume watching the TV program.

In Step 304, the terminal initiates a session update request.

In this embodiment, the content of the session update request may have the following two circumstances.

A. The session update request sent by the terminal carries a content object ID of the time-shift program (for example, RTSP URI carried in the Request-URI header field of the RTSP).

B. The session update request sent by the terminal does not carry the content object ID of the time-shift program.

In this step, the initiated session update request carries media description information (SDP offer1) about the content control channel, in which the information may carry the content object ID of the time-shift program.

In this embodiment, the multicast media streams of the original LTV may be stored or deactivated according to actual requirements.

In Step 305, the session update request is forwarded.

After receiving the session update request message from the terminal, the IMS Core forwards the received session update request of the terminal to an SCF that provides the LTV according to IMS Core signaling routing rules defined based on the 3GPP IMS specification.

In Step 306, a session initialization request is initiated.

After receiving the session update request, the SCF determines that the user is requesting the TsTV service according to the content of the session update request message, and initiates a new session initialization request to the TsTV MF entity that provides the TsTV service, in which the session initialization request message carries media description information (SDP Offer2) about the content control channel.

In Step 307, a session initialization response is returned.

After receiving the request, the TsTV MF entity that provides a time-shift service media resource establishes an SIP session.

As for the above circumstance A, the TsTV MF entity establishes an RTSP session at the same time, generates a session ID of the RTSP session, and distributes the media resource required by the TsTV service.

As for the above circumstance B, the TsTV MF entity does not establish an RTSP session, and carries the content object ID in the response message.

Afterwards, a session initialization response message (200 OK) carrying media Answer information (SDP Answer2) about the content control channel is returned, and it waits for the establishment of the TCP connection.

In Step 308, a session update response message is returned.

The SCF sends a session update response message (200 OK) to the IMS Core, in which the message carries media Answer information (SDP Answer1) about the content control channel.

In Step 309, the session update response message is forwarded.

The IMS Core forwards the session update response message (200 OK) to the terminal, in which the message carries the media Answer information (SDP Answer1) about the content control channel.

In steps 310 to 312, the terminal returns an ACK message.

After receiving the session update response message, the terminal stores critical information in the response message, for example, media description information of the content control channel and session ID. If an SIP reINVITE mechanism is adopted, the terminal sends a response ACK message to the IMS Core, and the message is transmitted to the TsTV MF entity via the SCF.

In Step 313, a bearer connection is established.

In the above steps, the terminal, SCF, and TsTV MF entity perform a media negotiation through interaction of the content control channel information.

The terminal establishes a transmission connection (for example, TCP connection) that bears an RTSP with the TsTV MF entity according to the media negotiation result.

In Step 313b, the media description information is acquired.

The terminal requests the TsTV MF entity for the media description information about the content delivery channel through the established content control channel, for example, sending an RTSP SUBSCRIBE request, and then the TsTV MF entity returns a response message (RTSP 200 OK) to the terminal, in which the message carries media description information about the content delivery channel.

In Step 314, a session update request is initiated.

The terminal once again sends a session update request to the IMS Core, and a media row of the content delivery channel (SDP Offer3) is newly added in the request message. As for the above circumstance B, the content object ID information is further added in a media row of the requested content control channel.

In Step 315, the session update request is forwarded.

After receiving the session update request message from the terminal, the IMS Core routes the received session update request of the terminal to an SCF according to IMS Core signaling routing rules defined based on the 3GPP IMS specification.

In Step 316, the session update request is sent.

After receiving the session update request, the SCF initiates the session update request to the corresponding TsTV MF entity, in which the session update request message carries the media row of the content control channel and the media row of the content delivery channel (SDP Offer4).

In Step 317, a session update response is returned.

After receiving the request, the TsTV MF entity distributes the media resource required by the TsTV service. As for the above circumstance B, the TsTV MF entity establishes an RTSP session, and carries session ID information in the response message. Then, the TsTV MF entity returns a session update response message (200 OK) carrying media Answer information (SDP Answer4) about the content control channel.

In Step 318, a session update response is returned.

The SCF sends a session update response message (200 OK) to the IMS Core, in which the message carries media Answer information (SDP Answer3) about the content delivery channel and the content control channel.

In Step 319, the session update response is forwarded.

The IMS Core forwards the session update response message (200 OK) to the terminal, in which the message carries the media Answer information (SDP Answer3) about the content delivery channel and the content control channel.

In steps 320 to 322, the terminal returns an ACK message.

After receiving the session update response message, the terminal stores critical information in the response message, for example, media description information and session ID information. If an SIP reINVITE mechanism is adopted, the terminal sends a response ACK message to the IMS Core, and the message is transmitted to the TsTV MF entity via the SCF.

In Step 323, the terminal sends a media playing request.

The terminal sends a media playing request message (RTSP PLAY) to the TsTV MF entity through the content control channel, in which the message carries parameter information such as a session ID and media position information (for example, absolute time for playing).

In Step 324, a media playing response is returned.

The TsTV MF entity sends a playing message (RTSP 200OK) to the terminal through the content control channel.

In Step 325, media streams are transmitted.

The TsTV MF entity sends the streaming media content to the terminal through the content delivery channel.

In this embodiment, the pause and resuming operations of the user are taken as examples to illustrate the implementation of the TsTV service, and it is understandable that, other operations, for example, fast forward or slow forward, may also be adopted and the specific implementations thereof are similar.

The difference between the TsTV service establishment method of this embodiment and that of the first embodiment is that, in this embodiment, the content control channel and the content delivery channel are not established at the same time. Instead, the content control channel is established first, and then the media description information about the content delivery channel is acquired via the content control channel, so as to establish the content delivery channel accordingly. Therefore, the flexibility of the TsTV service establishment method according to the embodiment of the present invention is enhanced.

3. The operation information is reported to trigger the TsTV service.

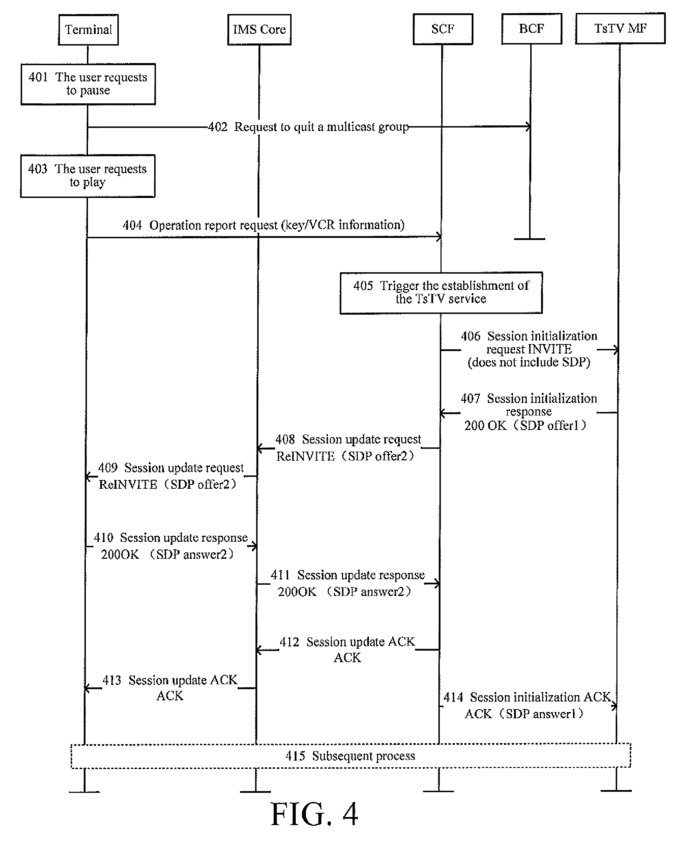

Referring to FIG. 4, in a third embodiment of the present invention, the TsTV service establishment method includes the following steps.

In Step 401, a user requests to pause a program.

The user watches an LTV in a multicast delivery mode, and requests a pause when watching the program.

The user requests a pause when watching the LTV supporting a VCR operation (or Trick Mode).

In Step 402, a terminal sends a request to a BCF for quitting a multicast group.

The terminal records playing position information of the media, and sends a report, about leaving the multicast group, to a multicast control point that provides multicast media streams. In this embodiment, it is unnecessary to send a report message about leaving the multicast group when being based on Version IGMP 1.0, and it is necessary to send a report message about leaving the multicast group when being based on Version IGMP 2.0, so that this step is optional.

In Step 403, the user requests to resume playing the TV program.

For example, the user presses a play key on a remote control handle to request to resume playing the TV program. As the user no longer receives the multicast media streams at this time, the TsTV service is required to enable the user to resume watching the TV program.

In Step 404, an operation report request is sent.

In this embodiment, the following two operation requests may be reported.

A. The terminal reports original information about a key (for example, key number): the terminal reports the original information about the key/operation of the user to the SCF, and then the SCF resolves the definition of the key, combines with the service context, and determines the service request information of the user.

B. The terminal reports VCR operation information (for example, information carrying RTSP parameters of Scale/Range): the terminal needs to convert the key/operation of the user into the VCR operation information, and reports the VCR operation information to the SCF.

The terminal may report the information to the SCF in various signaling implementation manners, including but not limited to, SIP Message/Info mechanism, SIP Subscribe/Notify mechanism, non-SIP mechanism, and the like.

In Step 405, the establishment of the TsTV service is triggered.

The SCF determines that the user requests the TsTV service according to a service processing logic (the user requests to pause/play when watching the LTV), and thus triggers the establishment of the TsTV service.

In Step 406, a session initialization request is initiated.

The SCF sends a session initialization request to the TsTV MF entity, in which the request does not include an SDP message body.

In Step 407, a session initialization response message is returned.

After receiving the session initialization request, the TsTV MF entity establishes an SIP session, and returns a session initialization response message (200 OK) to the SCF, in which the response carries media description information (SDP offer1) about a content control channel and a content delivery channel.

In Step 408, a session update request is sent.

After receiving the session initialization response message from the TsTV MF entity, the SCF sends a session update request to the IMS Core, in which the request carries media description information (SDP offer2) about the content control channel and the content delivery channel.

In Step 409, the session update request is forwarded.

The IMS Core forwards the received session update request to the terminal according to IMS signaling routing rules.

In Step 410, the terminal returns a session update response.

After receiving the session update request message from the network, the terminal returns a session update response message to the IMS Core according to capabilities of the terminal and service processing rules, in which the response message carries media Answer information (SDP answer2) about the content control channel and the content delivery channel.

In Step 411, the session update response is forwarded.

The IMS Core forwards the received session update response message to the SCF according to the IMS signaling routing rules.

In steps 412 to 413, a session update ACK is sent.

The SCF returns a session update ACK to the terminal, and the message is routed by the IMS Core.

In Step 414, a session initialization ACK is sent.

The SCF constructs a session initialization ACK message according to the session update response message received from the terminal, in which the session initialization ACK message carries media Answer information (SDP answer1) about the content control channel and the content delivery channel.

In Step 415, a subsequent process is performed.

The subsequent process includes the following steps.

A. The terminal sends a media playing request.

The terminal sends a media playing request message (RTSP PLAY) to the TsTV MF entity through the content control channel, in which the message carries parameter information such as a session ID and media position information (for example, absolute time for playing).

B. A media playing response is returned.

The TsTV MF entity sends a playing message (RTSP 200OK) to the terminal through the content control channel.

C. The media streams are transmitted.

The TsTV MF entity sends the streaming media content to the terminal through the content delivery channel.

In this embodiment, the terminal triggers the TsTV service through reporting the operation information, and the specific type of the operation information is determined according to actual requirements, thereby improving the flexibility of the TsTV service establishment method in the embodiment of the present invention.

4. The service information is reported to trigger the TsTV service.

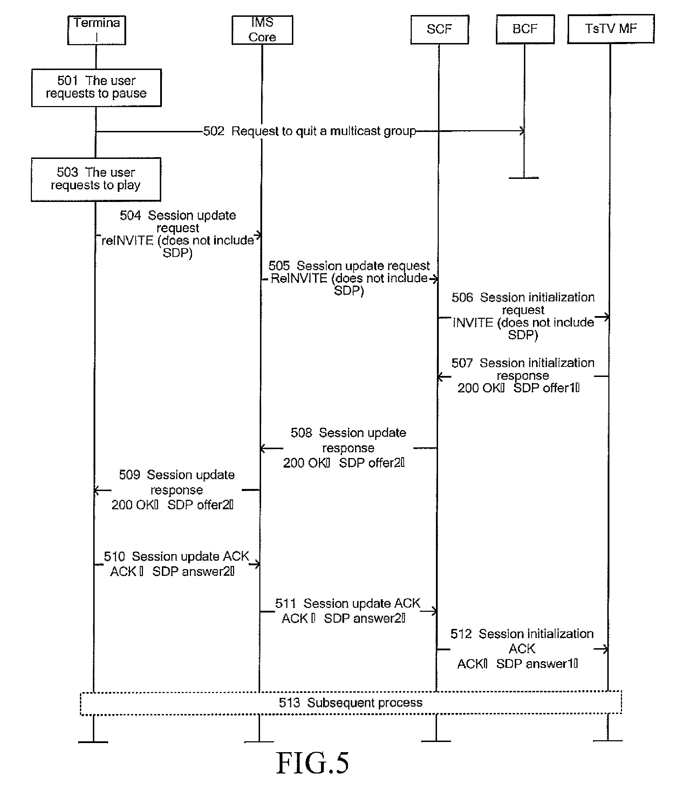

Referring to FIG. 5, in a fourth embodiment of the present invention, the TsTV service establishment method includes the following steps.

In Step 501, a user requests to pause a program.

The user watches an LTV in a multicast delivery mode, and requests a pause when watching the program.

The user requests a pause when watching the LTV supporting a VCR operation (or Trick Mode).

In Step 502, a terminal sends a request to a BCF for quitting a multicast group.

The terminal records playing position information of the media, and sends a report, about leaving the multicast group, to a multicast control point that provides multicast media streams. In this embodiment, it is unnecessary to send a report message about leaving the multicast group when being based on Version IGMP 1.0, and it is necessary to send a report message about leaving the multicast group when being based on Version IGMP 2.0, so that this step is optional.

In Step 503, the user requests to resume playing the TV program.

For example, the user presses a play key on a remote control handle to request to resume playing the TV program. As the user no longer receives the multicast media streams at this time, the TsTV service is required to enable the user to resume watching the TV program.

In Step 504, a session update request is initiated.

The terminal determines that the user is requesting the TsTV service according to the current service context and the VCR operation of the user, and sends a session update request to the IMS Core. The request does not include the SDP message body, but carries the TsTV service information. The manner for identifying that the user is requesting the TV service includes, but not limited to, using a service ID.

In Step 505, the session update request is forwarded.

The IMS Core forwards the received session update request to the SCF according to IMS signaling routing rules.

In Step 506, a session initialization request is initiated.

After receiving the session update request message from the terminal, the SCF determines to trigger the TsTV service according to the TsTV service information carried in the request, and sends a session initialization request to the TsTV MF entity. The request does not include an SDP message body.

In Step 507, a session initialization response is returned.

After receiving the session initialization request, the TsTV MF entity establishes a session and returns a session initialization response message, in which the response message carries media description information (SDP offer1) about a content control channel and a content delivery channel.

In Step 508, a session update response is returned.

The SCF constructs a session update response message and a message body based on the received session update response message and the service context information, in which the session update response message carries media description information (SDP offer2) about the content control channel and the content delivery channel.

In Step 509, the session update response is forwarded.

The IMS Core forwards the received session update response message to the terminal according to the IMS signaling routing rules.

In Step 510, a session update ACK is returned.

After receiving the session update response message from the network, the terminal returns a session update ACK message to the IMS Core according to capabilities of the terminal and service processing rules, in which the session update ACK message carries media Answer information (SDP answer2) about the content control channel and the content delivery channel.

In Step 511, the session update ACK is forwarded.

The IMS Core forwards the received session update ACK message to the SCF according to the IMS signaling routing rules.

In Step 512, a session initialization ACK is returned.

The SCF constructs a session initialization ACK message according to the received session update ACK message and the service context information, in which the session initialization ACK message carries media Answer information (SDP answer1) about the content control channel and the content delivery channel.

In Step 513, a subsequent process is performed.

The subsequent process includes the following steps.

A. The terminal sends a media playing request.

The terminal sends a media playing request message (RTSP PLAY) to the TsTV MF entity through the content control channel, in which the message carries parameter information such as a session ID and media position information (for example, absolute time for playing).

B. A media playing response is returned.

The TsTV MF entity sends a playing message (RTSP 200OK) to the terminal through the content control channel.

C. The media streams are transmitted.

The TsTV MF entity sends the streaming media content to the terminal through the content delivery channel.

In this embodiment, the terminal triggers the TsTV service through reporting the service information. Particularly, the terminal converts the key/operation of the user into service request information according to the current service context, for example, when the LTV service is undergoing, the terminal determines that the user is requesting the TsTV service, so that the terminal reports the time-shift service request information to the SCF. Thus, the SCF invokes a proper service processing logic according to the service request information, for example, triggering the establishment of the TsTV service, so as to improve the flexibility of the TsTV service establishment method in the embodiment of the present invention.

2. Time-shift channel mode

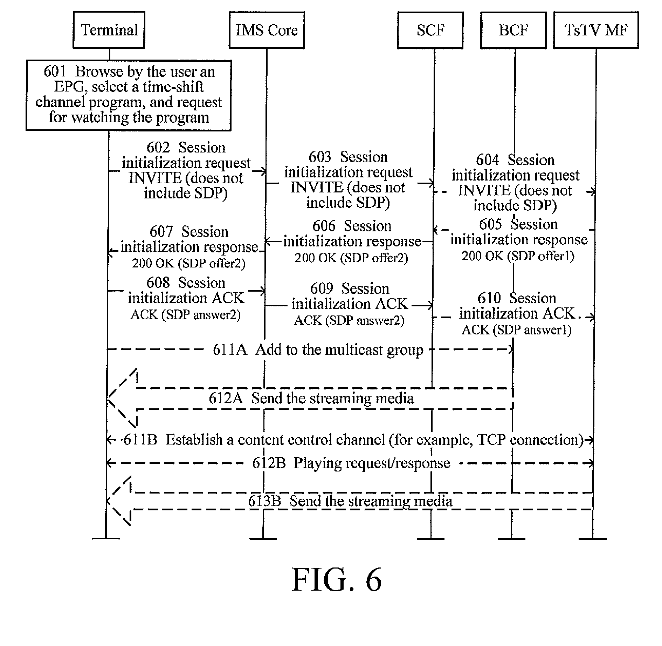

Referring to FIG. 6, in a fifth embodiment of the present invention, the TsTV service establishment method includes the following steps.

In Step 601, an EPG is browsed.

The user browses an EPG menu, enters a time-shift channel sub-menu, selects a specific time-shift channel (i.e., requesting to start playing from the previous playing position where the user quits the program or from the latest position) and/or designates a playing program or playing position, and requests for watching the program.

In Step 602, a session initialization request is initiated.

The terminal sends a session initialization request to the IMS Core, in which the request carries a channel ID and program position information, but does not include media description information (i.e., does not include SDP) about a content control channel or a content delivery channel.

In Step 603, the session initialization request is forwarded.

The IMS Core forwards the session initialization request from the terminal to the SCF according to routing rules described in the 3GPP IMS specification.

In Step 604, the session initialization request is initiated.

After receiving the session initialization request message, the SCF identifies that the user is requesting the TsTV service according to information carried in the request, and establishes a session. The user requests to watch the time-shift channel, but does not designate the playing program or position information. The SCF determines whether the media delivery channel adopts a multicast or unicast mode according to the stored user service information (for example, the information about the previous position where the user leaves this channel) and/or local policies.

If the current live content needs to be sent to the user, the delivery mode of multicast media streams is adopted. The SCF sends a session initialization response message to the IMS Core (i.e., Step 606), in which the message carries media description information about the multicast media streams. The subsequent establishment process is similar to that of the existing LTV service, and the details thereof are not described herein again.

If the content at a previous time point needs to be sent to the user, the delivery mode of unicast media streams is adopted. The SCF sends a session initialization request to the TsTV MF entity that provides the TsTV media resource, in which the message does not include the media description information. Step 605 is then performed.

In Step 605, a session initialization response is returned.

The TsTV MF entity returns a session initialization response message to the SCF, in which the message carries media description information (SDP Offer1) about a content control channel and a content delivery channel.

In Step 606, a session initialization response is returned.

The SCF constructs a session initialization response message according to the session initialization response message of the TsTV MF entity, in which the session initialization response message of the SCF carries media description information (SDP offer2) about the content control channel and the content delivery channel, and then the SCF sends the session initialization response message to the IMS Core.

In Step 607, the session initialization response is forwarded.

The IMS Core forwards the session initialization response message to the terminal according to routing rules described in the 3GPP IMS specification.

In steps 608 and 609 or steps 608, 609, and 610, the session initialization response is returned.

When Step 605 is performed in the above process, Step 610 needs to be performed.

The terminal sends a session initialization ACK message to the SCF through the IMS Core, in which the message carries media Answer information (SDP Answer2) about the content control channel and the content delivery channel, and then, the SCF forwards the message to the TsTV MF, in which the message carries media Answer information (SDP Answer1).

In steps 611A and 612A, when the multicast media streams are required, the terminal adds to a multicast group, and a BCF sends the multicast media streams to the terminal.

In steps 611B to 613B, when the unicast media streams are required, the content control channel is established, and a media playing request is initiated to the TsTV MF entity. The TsTV MF entity returns a playing response, and sends the media streams to the terminal.

In this embodiment, the implementation of the TsTV service in the time-shift channel mode is illustrated, thereby further improving the flexibility of the TsTV service establishment method in the embodiment of the present invention.

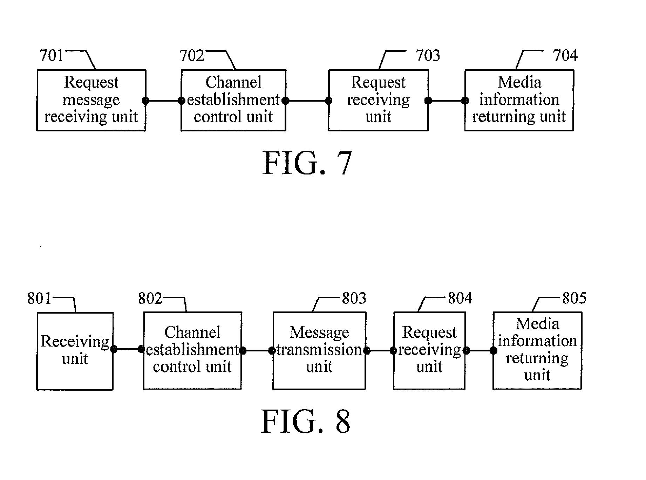

The device embodiments of the present invention are illustrated below. Referring to FIG. 7, in a first embodiment of the present invention, a TsTV MF entity includes a request message receiving unit 701, a channel establishment control unit 702, a request receiving unit 703, and a media information returning unit 704.

The request message receiving unit 701 is configured to receive a request message carrying content delivery channel information and content control channel information sent from a terminal.

The channel establishment control unit 702 is configured to establish a transmission connection with the terminal according to the content control channel information.

The request receiving unit 703 is configured to receive a media playing request sent from the terminal through the transmission connection.

The media information returning unit 704 is configured to send media information corresponding to the media playing request to the terminal through a content delivery channel established according to the content delivery channel information.

Referring to FIG. 8, in a second embodiment of the present invention, the TsTV MF entity includes a receiving unit 801, a channel establishment control unit 802, a message transmission unit 803, a request receiving unit 804, and a media information returning unit 805.

The receiving unit 801 is configured to receive a request message carrying content control channel information sent from a terminal.

The channel establishment control unit 802 is configured to establish a transmission connection with the terminal according to the content control channel information.

The message transmission unit 803 is configured to receive a request message for the content delivery channel information sent from the terminal through the transmission connection, and return a response message carrying the content delivery channel information to the terminal.

The request receiving unit 804 is configured to receive a media playing request sent from the terminal.

The media information returning unit 805 is configured to send media information corresponding to the media playing request to the terminal through a content delivery channel established according to the content delivery channel information.

Those of ordinary skill in the art should understand that, all or a part of the steps of the method according to the embodiments of the present invention can be implemented by relevant hardware under the instruction of a program. The program may be stored in a computer readable storage medium. When the program is executed, the following steps are performed. The TsTV MF entity receives a media negotiation carrying content delivery channel information and content control channel information initiated by a terminal, establishes a transmission connection with the terminal according to the media negotiation result, receives a media playing request sent from the terminal through the transmission connection, and sends media information corresponding to the media playing request to the terminal through a content delivery channel established according to the content delivery channel information.

The storage medium may be a ROM, a magnetic disk, or an optical disk.

In the embodiments of the present invention, the TsTV MF entity receives a request message carrying content delivery channel information and content control channel information sent from the terminal, so that the TsTV MF entity is enabled to establish a content control channel for transmitting control signaling with the terminal according to the received content control channel information, and establish a content delivery channel for transmitting real-time streaming media with the terminal according to the content delivery channel information, thereby realizing TsTV services in an IMS system.

In view of the above, a TsTV service establishment method and a TsTV MF entity of the present invention have been illustrated above in detail. It will be apparent to those skilled in the art that various modifications and variations can be made to the present invention without departing from the scope or spirit of the invention. In view of the foregoing, it is intended that the present invention cover modifications and variations of this invention provided that they fall within the scope of the following claims and their equivalents.

## Claims

1. A time-shift TV service establishment method, **characterized in** comprising:
receiving, by a time-shift TV media function, MF, entity, a media negotiation carrying content delivery channel information and content control channel information initiated by a terminal;
establishing a transmission connection with the terminal according to a media negotiation result;
receiving a media playing request sent from the terminal through the transmission connection; and
sending media information corresponding to the media playing request to the terminal through a content delivery channel established according to the content delivery channel information.

2. The method of claim 1, **characterized in that**, the process of receiving, by the time-shift TV MF entity, the media negotiation carrying content delivery channel information and content control channel information initiated by the terminal comprises:
sending, by a user, a pause request during the process of using a live TV service; and
recording, by the terminal, playing position information of the media.

3. The method of claim 2, **characterized in that**, the process of receiving, by the time-shift TV MF entity, the media negotiation carrying content delivery channel information and content control channel information initiated by the terminal comprises:
sending, by the terminal, a session update request message carrying content delivery channel information and content control channel information to a Service Control Function, SCF, when sending, by a user, a request for resuming playing; and
determining, by the SCF, whether or not the service requested by the user is a time-shift service according to service identification or content control channel information carried in the session update request message; and if it is determined that the service requested by the user is a time-shift service, sending a session initiation request message carrying content delivery channel information and content control channel information to the time-shift TV MF entity.

4. The method of any of claims 1 to 3, **characterized in that**, the process of establishing the transmission connection with the terminal according to the media negotiation result comprises:
establishing the transmission connection that bears the Real Time Streaming Protocol, RTSP, between the terminal and the time-shift TV MF entity according to the media negotiation result.

5. The method of claim 4, **characterized in that**, the process of receiving the media playing request sent from the terminal through the transmission connection comprises:
sending, by the terminal, the media playing request carrying the session identification and media position information to time-shift TV MF through the transmission connection.

6. A time-shift TV service establishment method, **characterized in** comprising:
receiving, by a time-shift TV media function, MF, entity, a media negotiation carrying content control channel information initiated by a terminal;
establishing a transmission connection with the terminal according to a media negotiation result;
receiving a request message for content delivery channel information sent from the terminal through the transmission connection, and returning a response message carrying the content delivery channel information to the terminal;
receiving a media playing request sent from the terminal; and
sending media information corresponding to the media playing request to the terminal through a content delivery channel established according to the content delivery channel information.

7. The method of claim 6, **characterized in that**, before receiving, by the time-shift TV MF entity, the media negotiation carrying content control channel information initiated by the terminal, the method comprises:
initiating, by a user, a pause request during watching living TV service; and
recording, by the terminal, playing position information of the media.

8. The method of claim 7, **characterized in that**, the process of the receiving, by the time-shift TV MF entity, the media negotiation carrying content control channel information initiated by the terminal comprises:
sending, by the terminal, a session update request carrying the content control channel information to Service Control Function, SCF, when sending, by a user, a request for resuming playing, wherein the content control channel information carries a content object identification; and
determining, by the SCF, whether or not the service requested by the user is a time-shift TV service according to service identification or the content control channel information carried in the session update request; and if it is determined that the service requested by the user is a time-shift TV service, initiating a session initialization request carrying the content delivery channel information and the content control channel information to the time-shift TV MF entity.

9. The method of claim 8, **characterized in that**, the process of the establishing the transmission connection with the terminal according to the media negotiation result comprises:
establishing the transmission connection that bears the Real Time Streaming Protocol, RTSP, between the terminal and the time-shift TV MF entity according to the media negotiation result.

10. A time-shift TV service establishment method, **characterized in** comprising:
receiving, by Service Control Function, SCF, operation information reported by a terminal;
sending a session initialization request message to a time-shift TV MF entity;
initiating, by the time-shift TV MF entity, a media negotiation request carrying content control channel information and content delivery channel information;
establishing a transmission connection with the terminal according to a media negotiation result;
receiving a media playing request sent from the terminal through the transmission connection; and
sending media information corresponding to the media playing request to the terminal through a content delivery channel established according to the content delivery channel information.

11. The method of claim 10, wherein the operation information is key operation information, or playing control operation information.

12. The method of claim 11, **characterized in that**, before sending the session initialization request message to the time-shift TV MF entity, the method comprises:
determining, by the SCF, whether or not the received information is the time-shift TV operation information; and if it is determined that the received information is the time-shift TV operation information, sending the session initialization request message to the time-shift TV MF entity.

13. A time-shift TV service establishment method, **characterized in** comprising:
receiving, by a service control function, SCF, a session update request message carrying time-shift TV service information sent from a terminal;
sending a session initialization request message to a time-shift TV MF entity;
initiating, by the time-shift TV MF entity, a media negotiation request carrying content control channel information;
establishing a transmission connection with the terminal according to a media negotiation result;
receiving a media playing request sent from the terminal through the transmission connection, returning a response message carrying content delivery channel information to the terminal; and
sending media information corresponding to the media playing request to the terminal through a content delivery channel established according to the content delivery channel information.

14. The method of 13, **characterized in that**, before sending the session initialization request message to the time-shift TV MF entity, the method comprises:
determining, by the terminal, the time-shift TV service information according to service context.

15. The method of claim 14, after initiating, by the time-shift TV MF entity, the media negotiation request carrying content control channel information, the method comprises:
constructing a session update response message based on the session initialization response message and the service context information; and
sending a session update response message carrying the content control channel information and the content delivery channel information to the terminal.

16. A time-shift TV service establishment method, **characterized in** comprising:
receiving, by service control function, SCF, a session initialization request message carrying a channel identification or carrying a channel identification and program position information sent from a terminal;
determining a content delivery type according to the session initialization request message; and
carrying out corresponding processes according to the content delivery type.

17. The method of claim 16, the process of determining the content delivery type according to the session initialization request message comprises:
determining to play the current program requested by a user according to the channel identification, or according to the channel identification and program location information;
sending, by the SCF, a session initialization response message carrying a multicast media stream description information to core network;
sending, by a multicast control point, corresponding multicast media stream to the terminal.

18. The method of claim 16, the process of determining the content delivery type according to the session initialization request message comprises:
determining to play the content at a previous time point requested by a user according to the channel identification, or according to the channel identification and program location information; and
sending, by the SCF, the session initialization request to a time-shift TV media function entity.

19. The method of claim 18, the process of determining the content delivery type according to the session initialization request message comprises:
initiating, by the time-shift TV media function entity, a media negotiation request carrying content control channel information;
establishing a transmission connection with the terminal according to a media negotiation result;
receiving a media playing request sent from the terminal through the transmission connection; and
sending media information corresponding to a media playing request to the terminal through a content delivery channel established according to the content delivery channel information.

20. A time-shift media function entity, **characterized in** comprising:
a request message receiving unit, configured to receive a request message carrying content delivery channel information and content control channel information sent from a terminal;
a channel establishment control unit, configured to establish a transmission connection with the terminal according to the content control channel information;
a request receiving unit, configured to receive a media playing request sent from the terminal through the transmission connection; and
a media information returning unit, configured to return media information corresponding to the media playing request to the terminal through a content delivery channel established according to the content delivery channel information;
or:
a receiving unit, configured to receive a request message carrying content control channel information sent from a terminal;
a channel establishment control unit, configured to establish a transmission connection with the terminal according to the content control channel information;
a message transmission unit, configured to receive a request message for content delivery channel information sent from the terminal through the transmission connection, and return a response message carrying the content delivery channel information to the terminal;
a request receiving unit, configured to receive a media playing request sent from the terminal; and
a media information returning unit, configured to return media information corresponding to the media playing request to the terminal through a content delivery channel established according to the content delivery channel information.

21. A method for time-shift TV service triggering, **characterized in** comprising:
sending, by a terminal, operation information and/or time-shift TV service information to a service control function, SCF, according to an operation of a user; and
triggering, by the SCF, a time-shift TV service according to the operation information and/or time-shift TV service information.

22. The method of claim 21, the process of sending, by a terminal, operation information and/or time-shift TV service information to the service control function, SCF, according to the operation of the user comprises:
sending, by the terminal, the session initiation protocol message carrying the operation information and/or time-shift TV service information to the SCF.
